# EUROPÄISCHE PATENTSCHRIFT

(11) **EP 2 567 249 B1**
(45) Veröffentlichungstag und Bekanntmachung des Hinweises auf die Patenterteilung: **22.03.2017**
(21) Anmeldenummer: 10720545.2
(22) Anmeldetag: 07.05.2010
(51) Int. Cl.: H04W 24/00, G01S 5/00, G01S 1/68

(54) **RÄUMLICHE ANORDNUNG EINER MEHRZAHL VON KOMMUNIKATIONSGERÄTEN UND VERFAHREN ZUR BESTIMMUNG DER RÄUMLICHEN POSITION EINES GERÄTES**
SPATIAL ARRANGEMENT OF A PLURALITY OF COMMUNICATION DEVICES AND METHOD FOR DETERMINING THE SPATIAL POSITION OF A DEVICE
AGENCEMENT SPATIAL D'UNE PLURALITÉ D'APPAREILS DE COMMUNICATION ET PROCÉDÉ DE DÉTERMINATION DE LA POSITION SPATIALE D'UN APPAREIL

(43) Veröffentlichungstag der Anmeldung: 13.03.2013
(73) Patentinhaber: Unify GmbH & Co. KG, 80807 München (DE)
(72) Erfinder: SCHMITT, Johannes, 64291 Darmstadt (DE); REINHARDT, Andreas, 64285 Darmstadt (DE); KROPFF, Matthias, 64285 Darmstadt (DE)
(74) Vertreter: Fritzsche, Thomas
(86) Internationale Anmeldenummer: PCT/EP2010/002835
(87) Internationale Veröffentlichungsnummer: WO 2011/137920

(56) Entgegenhaltungen:
- WO-A1-03/101139
- US-A1- 2007 014 252

## Beschreibung

Die Bestimmung der aktuellen Position von Geräten oder Gütern spielt in unterschiedlichen Bereichen der Technik eine Rolle mit zunehmender Bedeutung. Beispiele für solche Anwendungen sind die Verfolgung von Paketen auf dem Weg ihrer Zustellung oder die Umleitung von Telefonanrufen in Abhängigkeit vom Aufenthaltsort des Rufempfängers. Weitere Beispiele sind dem Fachmann bekannt. Bekannte Verfahren zur Positionsbestimmung basieren auf unterschiedlichen technischen Grundlagen. Auf der Grundlage des globalen Positionierungssystems (GPS) existieren Verfahren zur Positionsschätzung, die heute in weiten Bereichen eingesetzt werden, die aber in dichten urbanen Umgebungen mit Ungenauigkeiten verbunden sind. Die dabei auftretenden Abweichungen oder Ungenauigkeiten liegen im Bereich zwischen 0,1 und 10 m.

Ähnlichen Einschränkungen der Genauigkeit unterliegt die Höhenschätzung mit Hilfe von GPS-Empfängern, wodurch Positionsbestimmungen auf der Grundlage des globalen Positionierungssystems bei manchen Anwendungen zu ungenau sind. Außerdem erfordert eine Positionsbestimmung auf der Grundlage des globalen Positionierungssystems eine Sichtverbindung zu einigen der verwendeten Satelliten, wodurch dieses Verfahren innerhalb geschlossener Räume häufig nicht anwendbar ist.

Ein weiteres Verfahren zur Positionsbestimmung beruht auf einer Analyse von Funkzellen, beispielsweise im GSM-Funknetz. Mobiltelefone nach dem GSM-Standard registrieren sich bei einer Basisstation, wobei das Mobilfunknetzwerk und dessen Betreiber darüber informiert werden, auf welchem Wege das Mobiltelefon erreichbar ist. Unter der Voraussetzung einer ausreichenden räumlichen Dichte solcher Basisstationen, ist es hierbei möglich, eine Positionsbestimmung von Mobiltelefonen über sogenannte Triangulationsverfahren vorzunehmen.

In ländlichen Gebieten ist jedoch die Dichte der Basisstationen häufig zu gering, um solche Verfahren durchführen zu können. Dabei wirken sich auch Wände von Gebäuden gewöhnlich störend auf die Genauigkeit aus, mit der Positionsbestimmungen möglich sind. Außerdem erschwert die Mehrwegeausbreitung in urbanen Umgebungen, in denen die elektromagnetischen Wellen durch Wände mehrfach reflektiert werden, eine Positionsbestimmung in solchen Umgebungen erheblich.

Ähnlichen Einschränkungen unterliegt die Positionsbestimmung mit Hilfe von drahtlosen Netzen, wie z. B. mit Hilfe von sogenannten Wireless Local Area Networks. Dabei sind solche Netze vornehmlich innerhalb von Gebäuden oder in der Nähe von Gebäuden verfügbar und sie unterliegen ähnlichen Einschränkungen aufgrund der Ausbreitungseigenschaften der verwendeten Radiowellen, wie die bereits erwähnten Mobilfunknetze, obwohl sie in unterschiedlichen Frequenzbereichen betrieben werden.

Funktechnologien mit noch kürzerer Reichweite, wie beispielsweise Ad-hoc-Funknetze auf der Basis des sogenannten Bluetooth-Standards, die je nach der verwendeten Klasse Reichweiten zwischen wenigen Metern und bis zu 100 m erreichen, ermöglichen in einigen Fällen recht genaue Schätzungen der Position, besonders dann, wenn mehrere Bluetooth-Geräte innerhalb der Funkreichweite angeordnet sind.

Verfahren zur Positionsbestimmung auf der Grundlage von Ultraschall- oder Infrarot-Funkfeuern stoßen an technische Grenzen wegen der Unfähigkeit solcher Wellen, Gebäudewände zu durchdringen. Innerhalb einzelner Räume stellen solche Verfahren jedoch Möglichkeiten zur Positionsbestimmung bereit.

Schließlich sind Vorschläge bekannt geworden, Daten auf eine Vielzahl von Funkkanälen zu verteilen, wodurch es möglich werden soll, die in Abstand eines Senders aufgrund der unterschiedlichen Ankunftszeiten der Signale zu berechnen. Solche Vorschläge sind jedoch in der Praxis bisher nicht realisiert worden, weil die hierfür erforderliche Funktechnik noch nicht entwickelt wurde.

Die Druckschrift WO 03/101139 A1 zeigt eine räumliche Anordnung gemäß dem Oberbegriff des Anspruchs 1 sowie ein Verfahren zur Positionsbestimmung gemäß dem Oberbegriff des Anspruchs 7.

Der Erfindung liegt die Aufgabe zugrunde, eine technische Lehre zur Positionsbestimmung anzugeben, die zumindest einige Nachteile bekannter Lösungen vermeidet oder zumindest einigen Beschränkungen bekannter Verfahren nicht unterliegt, wobei eine höhere Genauigkeit der Positionsbestimmung erzielt und insbesondere die Positionsbestimmung in drei Dimensionen wirkungsvoll unterstützt werden soll. Diese Aufgabe wird durch eine Anordnung gemäß Anspruch 1 bzw. durch ein Verfahren gemäß Anspruch 7 gelöst.

Erfindungsgemäß ist eine räumliche Anordnung einer Mehrzahl von zweiten Kommunikationsgeräten mit jeweils wenigstens zwei Funkschnittstellen eines ersten Typs und eines zweiten Typs in einem Netzwerk aus einer Mehrzahl von ersten Kommunikationsgeräten mit jeweils wenigstens einer Funkschnittstelle des zweiten Typs vorgesehen, wobei das Netzwerk über die Funkschnittstelle des zweiten Typs vermittelt wird. Wenigstens ein Teil der ersten und der zweiten Kommunikationsgeräte ist erfindungsgemäß zur Aussendung erster Signale über die Funkschnittstellen des zweiten Typs eingerichtet. Wenigstens ein Teil der ersten und der zweiten Kommunikationsgeräte ist zum Empfang dieser ersten Signale eingerichtet und mit Einrichtungen zur Schätzung ihrer eigenen Position innerhalb der räumlichen Anordnung anhand der empfangenen ersten Signale ausgestattet. Wenigstens ein Teil der zweiten Kommunikationsgeräte ist mit einer Vorrichtung zum Aussenden zweiter Signale über die Funkschnittstellen des wenigstens einen ersten Typs ausgestattet. Die zweiten Signale enthalten eine Angabe über die eigene Position der sie aussendenden zweiten Kommunikationsgeräte innerhalb der räumlichen Anordnung. Erfindungsgemäß ist ein drittes Kommunikationsgerät mit einer Funkschnittstelle des ersten Typs vorgesehen, welches mit einer Einrichtung zur Bestimmung der eigenen Position anhand der von diesem Kommunikationsgerät über die Funkschnittstelle des ersten Typs empfangenen, vom zweiten Kommunikationsgeräten ausgesendeten zweiten Signale ausgestattet ist und Positionsdaten der zweiten Kommunikationsgeräte über wenigstens zwei Funkkanäle empfängt und seine eigene Position als Mittelwert der über die einzelnen Funkkanäle bestimmten Positionen ermittelt. Die zweiten Kommunikationsgeräte sind als feinkörniges Gitter innerhalb der räumlichen Anordnung aufgestellt und wenigstens die zweiten Signale eine Angabe über die Position in drei Dimensionen enthalten.

Unter einem Netzwerk soll im Zusammenhang mit der Beschreibung der vorliegenden Erfindung jeder Verbund einer Mehrzahl von Kommunikationsgeräten verstanden werden, die über wenigstens eine Kommunikationsschnittstelle, vorzugsweise über eine drahtlose Kommunikationsschnittstelle, Nachrichten untereinander austauschen können. Beispiele für solche Netze oder Netzwerke sind sogenannte Local Area Networks oder sogenannte Wireless Sensor Networks oder sogenannte Wireless Personal Area Networks, vorzugsweise nach dem Standard IEEE 802.15.4. Weitere Beispiele für solche Netze sind kurzreichweitige Funknetze, wie sogenannte Ad-hoc-Funknetze, beispielsweise auf der Grundlage des sogenannten Bluetooth-Standards oder Mobilfunknetze, beispielsweise nach dem GSM-Standard.

Derartige Netzwerke basieren auf unterschiedlichen Kommunikationsschnittstellen. Diese Kommunikationsschnittstellen, vorzugsweise Funkschnittstellen, zeichnen sich durch jeweils spezifische Signal-Kodierungsverfahren und durch spezifische Funkfrequenzbänder aus. Beispiele für solche Funkschnittstellen sind die Funkschnittstellen der Mobilfunkstandards, beispielsweise des GSM-Standards oder die Funkschnittstellen der Wireless Personal Area Networks nach dem IEEE 802.15.4-Standard oder von Ad-hoc-Netzen nach dem Bluetooth-Standard.

Unter einem ersten Kommunikationsgerät soll im Zusammenhang mit der Beschreibung der vorliegenden Erfindung jede Art von Kommunikationsgerät verstanden werden, das zum Aufbau eines Netzwerks im oben beschriebenen Sinne geeignet ist. Bevorzugte Ausführungsformen solcher ersten Kommunikationsgeräte sind sogenannte Access Points von sogenannten Wireless Local Area Networks, die dem Fachmann in großer Zahl und in unterschiedlichen Ausführungsformen bekannt sind. Unter einem zweiten Kommunikationsgerät soll im Zusammenhang mit der Beschreibung der vorliegenden Erfindung ein Kommunikationsgerät verstanden werden, das über wenigstens zwei Funkschnittstellen im oben dargestellten Sinn verfügt. Bevorzugte Beispiele für solche zweiten Kommunikationsgeräte sind sogenannte Tubicles, die wenigstens zwei Funkschnittstellen verwenden und hierfür mit wenigstens zwei Funkgeräten ausgestattet sind, die über eine zentrale Prozessoreinheit zusammengeschaltet sind. Beispiele für solche Tubicles werden in der Veröffentlichung "Tubicles: Heterogeneous Wireless Sensor Nodes", Technical Report KOM-TR-2008-09 der Technischen Universität Darmstadt beschrieben.

Gemäß einem bevorzugten Ausführungsbeispiel der Erfindung ist das Netzwerk mit einem Server verbunden, der eine Einrichtung zur Unterstützung der Schätzung der Positionen der zweiten Kommunikationsgeräte umfasst.

Gemäß einem weiteren bevorzugten Ausführungsbeispiel der Erfindung umfasst wenigstens ein Teil der zweiten Kommunikationsgeräte eine Einrichtung zur Weiterleitung der empfangenen ersten Signale zusammen mit einem Maß für die Stärke des jeweiligen Empfangssignals an den Server.

Gemäß einem weiteren bevorzugten Ausführungsbeispiel der Erfindung umfasst wenigstens ein Teil der zweiten Kommunikationsgeräte eine Einrichtung zur Speicherung der empfangenen ersten Signale zusammen mit einem Maß für die Stärke des jeweiligen Empfangssignals.

Gemäß einem weiteren Ausführungsbeispiel der Erfindung ist die Einrichtung zur Schätzung der eigenen Position innerhalb der räumlichen Anordnung anhand der empfangenen ersten Signale zur Durchführung einer Triangulation zur Schätzung der eigenen Position ausgerüstet.

Gemäß einem weiteren bevorzugten Ausführungsbeispiel der Erfindung verfügen die zweiten Kommunikationsgeräte über eine Prozessoreinrichtung und über wenigstens zwei Funkeinrichtungen und die Prozessoreinrichtung steuert die wenigstens zwei Funkeinrichtungen.

Bei einem bevorzugten Ausführungsbeispiel eines erfindungsgemäßen Verfahrens sind die Mehrzahl von Sendern zweite Kommunikationsgeräte in einer Anordnung gemäß einem der bevorzugten Ausführungsbeispiele der vorliegenden Erfindung. Dabei senden diese zweiten Kommunikationsgeräte ihre Positionsdaten bevorzugt über wenigstens zwei Funkkanäle aus.

Gemäß einer weiteren bevorzugten Ausführungsform eines erfindungsgemäßen Verfahrens sind die zweiten Kommunikationsgeräte räumlich stationär angeordnet und ermitteln ihre eigene Position nur innerhalb einer Initialisierungsphase oder nach einem Wechsel ihres Standortes.

Die vorliegende Erfindung beruht auf dem Grundgedanken, die Position von Personen, die ein Kommunikationsgerät bei sich führen oder von Objekten innerhalb geschlossener Räume auf der Grundlage einer Mehrzahl von Funktechnologien zu schätzen. Dabei wird der Vorgang der Schätzung auch als Lokalisation oder Positionierung bezeichnet, wobei diese Begriffe im Folgenden synonym verwendet werden. Die vorliegende Erfindung eignet sich dabei besonders vorteilhaft für Situationen, in denen ein kleiner absoluter Fehler bei der Positionsbestimmung gefordert wird. Da Gebäude häufig aus mehreren Stockwerken bestehen, ermöglicht das erfindungsgemäße Verfahren vorzugsweise eine Lage- und Positionsbestimmung in drei Dimensionen. Das erfindungsgemäße Verfahren bevorzugt ferner die Verwendung einer heterogenen Umgebung aus Kommunikationsgeräten, die vorzugsweise Bluetooth-fähige Mobiltelefone, WLAN-fähige Notebook-Computer und/oder kleine kostengünstige eingebettete Sensorknoten enthält, wie beispielsweise solche Sensorknoten, die im Zusammenhang mit logistischen Infrastrukturobjekten Verwendung finden.

Eine möglichst genaue Kenntnis der Position eines Objekts kann in unterschiedlichsten Anwendungen von Vorteil sein. So teilen sich in normalen Büroumgebungen häufig mehrere Personen Gebrauchsgegenstände, wie z. B. Beschriftungsgeräte oder andere seltener benötigte Geräte, die von diesen Personen an verschiedensten Orten abgelegt werden können. Andere Anwendungsgebiete schließen Fabrikationsumgebungen oder Kaufhäuser ein, in denen der momentane Aufenthaltsort von Gegenständen zu ermitteln ist.

Andere Anwendungen umfassen die automatische Auswahl eines Mobiltelefonprofils in Abhängigkeit von dem momentanen Aufenthalt des Benutzers des Mobiltelefons oder die Benachrichtigung eines Service-Technikers in Abhängigkeit von seinem Abstand zu einer zu wartenden Maschine, wobei diesen Anwendungen gemein ist, dass die Position eines Benutzers oder einer Person mit möglichst hohem Genauigkeitsgrad bekannt sein müssen.

Erfindungsgemäß wird vorgeschlagen, zur Positionsbestimmung Funkbaken (Beacon) zu verwenden, die in einem Funknetz integriert sind und über eine Mehrzahl von Radioschnittstellen verfügen. Vorzugsweise können diese Funkbaken über folgende Radioschnittstellen kommunizieren:
1. Die Funkschnittstelle des Wireless Local Area Network. Wireless Local Area Networks sind lokale Funknetze, die normalerweise nach dem Standard IEEE-802.11 arbeiten. Für solche Netze wird in einigen Zusammenhängen auch der Bereich WiFi verwendet. Im Gegensatz zum Wireless Personal Area Network (WPAN) haben Wireless Local Area Networks (WLANs) größere Sendeleistungen und Reichweiten und bieten im Allgemeinen höhere Datenübertragungsraten. Als Modulationsverfahren wird normalerweise der sogenannte Orthogonal Frequency Division Multiplex (OFDM) verwendet, der eine spezielle Implementierung der Multicarrier-Modulation darstellt, bei dem mehrere orthogonale Trägersignale zur digitalen Datenübertragung verwendet werden.
2. Funkschnittstellen nach dem Bluetooth-Standard mit eingeschaltetem Beacon-Mode. Bluetooth ist ein in den 1990er Jahren durch die Bluetooth Special Interest Group entwickelter Standard gemäß IEEE 802.15.1 für die Funkübertragung zwischen Geräten über eine kurze Distanz (Wireless Personal Area Networks). Der Bluetooth-Standard ermöglicht dabei sowohl verbindungslose als auch verbindungsbehaftete Übertragungen von Punkt zu Punkt und sogenannte Ad-hoc-Netze.
3. Die Funkschnittstelle der Wireless Personal Area Networks nach dem Standard IEEE 802.15.4 ermöglicht ähnlich wie Bluetooth den Aufbau kurzreichweitiger Wireless Personal Area Networks mit kostengünstiger Hardware bei sicherer Übertragung.

Für jede zu unterstützende Funkschnittstelle wird eine entsprechende Funkeinrichtung in die zweiten Kommunikationsgeräte, beispielsweise in die Tubicles integriert. Diese zweiten Kommunikationsgeräte, vorzugsweise Tubicles, werden in eine existierende Wireless Local Area Network Infrastruktur aus Access Points integriert. Auf diese Weise kann eine existierende WLAN-Infrastruktur neben ihrer eigentlichen Aufgabe, ein drahtloses Local Area Netzwerk zur Verfügung zu stellen, für die Positionsbestimmung verwendet werden. Vorzugsweise verfügen die zweiten Kommunikationsgeräte über drei Funkschnittstellen. Eine erste Funkschnittstelle entspricht der Funkschnittstelle des WLAN-Standards, eine zweite entspricht dem Bluetooth-Standard und eine dritte dem IEEE 802.15.4-Standard. Die zweiten Kommunikationsgeräte haben in dieser Infrastruktur die Aufgabe, sich mit der existierenden WLAN-Infrastruktur als Endgeräte (Client Device) zu verbinden. Diese Aufgabe können die Tubicles aufgrund der vorhandenen WLAN-Schnittstelle problemlos bewältigen. Mit Hilfe dieser Funkschnittstelle beobachten die Tubicles den Datenverkehr auf dem WLAN und registrieren Baken-Signale (Beacons), die sowohl von Access Points, als auch von Tubicles stammen können. Vorzugsweise werden alle empfangenen Baken-Signale in einer Datenstruktur (Array of Tuples) gespeichert, die vorzugsweise die beobachteten Bakensender und deren Signalstärken enthalten.

Die existierende WLAN-Infrastruktur wird von den Tubicles mit Hilfe der WLAN-Schnittstelle vorzugsweise dazu verwendet, eine Verbindung zu einem im Internet oder im Intranet befindlichen Server aufzubauen (Mapping Server), der eine Position innerhalb des mit dem WLAN ausgerüsteten Gebäudes auf der Grundlage der Datenstrukturen herleiten kann, die vorzugsweise die beobachteten Bakensender und deren entsprechende Signalstärken beinhaltet.

Nachdem die Position bestimmt ist, sendet das Tubicle selbst Baken-Signale ("beacon signals") in einem Broadcast-Modus aus, der die eigene physikalische Adresse (BSSID, "basic service set identifier") der Funkübertragungseinrichtung und die bestimmte Position des Knotens, vorzugsweise in absoluten Koordinaten oder in einem Koordinatensystem des benutzten Gebäudes. Vorzugsweise wird die Position zusätzlich zur physikalischen Adresse übertragen. Auf der Grundlage existierender technischer Standards kann dies beispielsweise dadurch erreicht werden, dass das WLAN Baken mit einer erweiterten Adresse (ESSID, "extended service set identifier") sendet, die kodierte Positionsinformation enthält.

Zusätzlich wird diese Positionsinformation auch im Broadcast-Modus über die anderen integrierten Funkübertragungseinrichtungen und deren Funkschnittstellen übertragen. Vorzugsweise also über die Bluetooth-Schnittstelle und die Schnittstelle nach dem Standard IEEE 802.15.4. Ähnlich wie bei der Übertragung über die WLAN-Schnittstelle kann die Position in die ESSID der Bluetooth-Bake eingebettet werden. Andere Protokolle, wie z. B. das Protokoll nach dem Standard IEEE 802.15.4 können leicht um ein Format erweitert werden, das Positionsinformation enthalten kann.

Die zweiten Kommunikationsgeräte, vorzugsweise also die Tubicles, sind Geräte mit einer Mehrzahl von Funkschnittstellen, die eine entsprechende Mehrzahl von Funkeinrichtungen (Transceiver) und eine Steuerungseinrichtung zu deren Steuerung enthalten. Die Steuerungseinrichtung verwaltet und steuert die Funkeinrichtungen und führt auch die Lokalisation des Tubicles selbst durch, wobei sie auf die Unterstützung einer externen Mapping Database zurückgreift.

Die Positionsbestimmung von Kommunikationsgeräten kann dabei auf folgende Weisen erfolgen. Mobile WLAN-fähige Geräte können sich mit existierenden WLAN Access Points verbinden und sich die Unterstützung der Mapping Data Base zu Nutze machen, sofern dies nicht durch den Netzwerkadministrator aus Sicherheitsgründen unterbunden wird. Außerdem oder dazu alternativ können mobile WLAN-fähige Geräte Netzwerkbaken mithören, die sowohl durch existierende WLAN Access Points als auch durch Tubicles ausgesandt werden können und dabei die Information zur Bestimmung ihrer eigenen Position verwenden, die in der Form von ESSIDs in die Signale eingebettet ist. Unter einem ESSID ist dabei ein sogenannter Funknetzwerkname zu verstehen, mit dessen Hilfe verschiedene Wireless Local Area Networks am selben Ort betrieben werden können. Der Basic Service Set Identifier (BSSID) ist die eindeutige Bezeichnung eines Access Points in einem WLAN. Die IEEE 802.11-1999 Wireless LAN Spezifikation definiert eine BSSID als die MAC-Adresse einer Station eines Access Points im Infrastrukturmodus. Die BSSID identifiziert somit jeden Wireless Access Point eindeutig, was insbesondere benötigt wird, um Access Points mit identischer ESSID unterscheiden zu können.

Eine andere Möglichkeit zur Positionsbestimmung, die jedoch auch mit den vorher genannten kombiniert werden kann, besteht darin, Bluetooth-fähige Geräte, wie beispielsweise Mobiltelefone, zum Abhören der Bluetooth-Baken zu verwenden, die auf dem Radiokanal durch die Tubicles ausgestrahlt werden. Dabei ist es nicht erforderlich, eine Verbindung aufzubauen, was möglicherweise für eine schnelle Lokalisierung zu zeitaufwändig sein könnte, da die gesamte Lokalisierungsinformation in der Zeichenfolge des ESSID enthalten ist. Die Position kann dann auf der Grundlage einer Triangulation geschätzt werden.

Eine weitere Möglichkeit, die jedoch auch mit den vorher genannten Möglichkeiten kombiniert werden kann, besteht darin, dass mobile, den IEEE 802.15.4-Standard unterstützende Geräte, wie z. B. mit einem Sensor ausgerüstete Transportcontainer oder Pakete ihre Position in analoger Weise, wie zuvor beim Bluetooth-Standard beschrieben, bestimmen könnten.

Außerdem können Geräte mit einer Mehrzahl der vorgenannten Funkschnittstellen eine Lokalisierung dadurch herbeiführen, dass die mit Hilfe einzelner Funkschnittstellen ermittelte Lokalisierung schließlich gemittelt wird, um daraus eine verbesserte, möglicherweise genauere Position durch Mittelwertbildung über verschiedene Werte zu bestimmen.

Um die Genauigkeit der Positionsbestimmung weiter zu verbessern und insbesondere auch die Positionsbestimmung in drei Dimensionen wirkungsvoll zu unterstützen, sind die zuvor beschriebenen Tubicles oder entsprechende zweite Kommunikationsgeräte als feinkörniges Gitter in dem verwendeten Raumbereich aufgestellt. In Gebäuden könnten Tubicles vorteilhaft als Beleuchtungskörper (Light Boards), Netzsteckdosen (Wall Power Outlets) oder Elektrogeräte, wie sie in einem Haushalt üblich sind, realisiert werden.

Verglichen mit existierenden Verfahren zur Positionsbestimmung oder zur Lokalisation bietet die beschriebene Erfindung aufgrund der beschriebenen hybriden Technologie, die die Verwendung einer Mehrzahl von Funkschnittstellen und entsprechender Gateway Nodes einschließt, die autonom ihre Position bestimmen, bevor sie diese im Broadcast-Modus aussenden, eine flexiblere Lösung zur Positionsbestimmung als Verfahren, die auf nur einem Funkmedium basieren, weil gemäß der vorliegenden Erfindung eine Vielzahl von Geräten mit verschiedenen Funkkommunikationsprotokollen und Funkschnittstellen sich des Systems bedienen können.

Die Genauigkeit der Lokalisierung kann auch dadurch erhöht werden, dass die Tubicle Nodes eine verbesserte feinverteiltere Auflösung der betrachteten räumlichen Zone ermöglichen. Insbesondere können Koordinaten in drei Dimensionen transferiert werden, wodurch eine Positionierung in drei Dimensionen unterstützt wird. Gemäß einer bevorzugten Ausführungsform der Erfindung kann der Datenaustausch auf den Transport von Datensätzen mit Informationen über die Positionen zwischen benachbarten WLAN-Knoten beschränkt werden, wodurch die Lokalisation in einer verteilten Weise durchgeführt wird und durch die Knoten, die ihre eigene Position bestimmen wollen. Der Transport von Datensätzen zum Mapping Server und das damit verbundene Daten-Verkehrsvolumen kann vorzugsweise auf die Initialisierungsphase beschränkt werden, so dass eine Belastung des Netzwerks hierdurch vermieden werden kann.

Im Folgenden wird die Erfindung anhand bevorzugter Ausführungsbeispiele und mit Hilfe der Figuren näher beschrieben.

Dabei zeigt
Fig. 1 in schematischer Weise eine erfindungsgemäße Anordnung nach einem bevorzugten Ausführungsbeispiel der Erfindung;
Fig. 2 in schematischer Weise eine erfindungsgemäße Anordnung nach einem weiteren bevorzugten Ausführungsbeispiel der Erfindung;
Fig. 3 in schematischer Weise eine erfindungsgemäße Anordnung nach einem weiteren bevorzugten Ausführungsbeispiel der Erfindung;
Fig. 4 in schematischer Weise ein zweites Kommunikationsgerät nach einem bevorzugten Ausführungsbeispiel der Erfindung.

Im Rahmen der Beschreibung der vorliegenden Erfindung werden die nachstehenden Akronyme und Bezugszeichen verwendet:
- AP1, ..., APm: erste Kommunikationsgeräte
- T1, .., Tn: zweite Kommunikationsgeräte, Sender
- RI1: Funkschnittstellen eines ersten Typs
- RI2: Funkschnittstellen eines zweiten Typs
- N: Netzwerk
- BS1, ..., BSk: erste Signale
- PS1,...,PSj: zweite Signale
- DB: Einrichtung zur Unterstützung der Schätzung der Positionen der zweiten Kommunikationsgeräte
- AD1,...,AD3: Funkeinrichtungen
- D: drittes Kommunikationsgerät
- iRs: Einträge ("information records") in einer Datenbank
- 11 bis 25: Signale zwischen Kommunikationsgeräten
- MCU: Prozessoreinheit zur Steuerung von Funkeinrichtungen
- 41 bis 46: Signale des dritten Kommunikationsgeräts

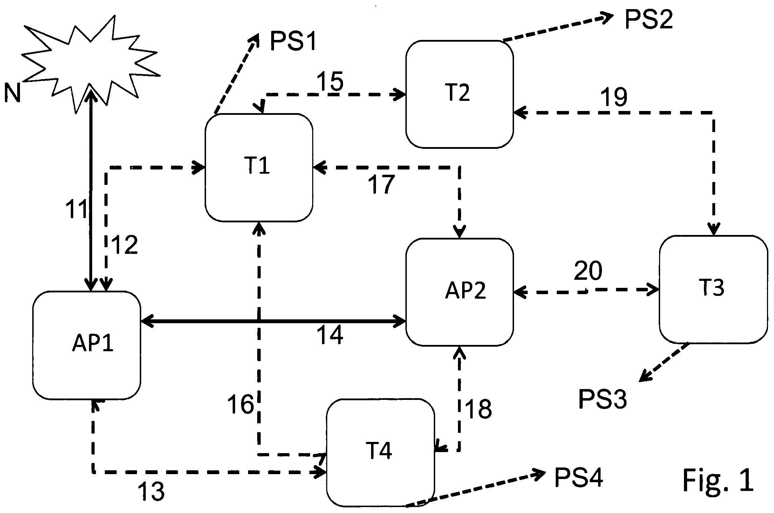

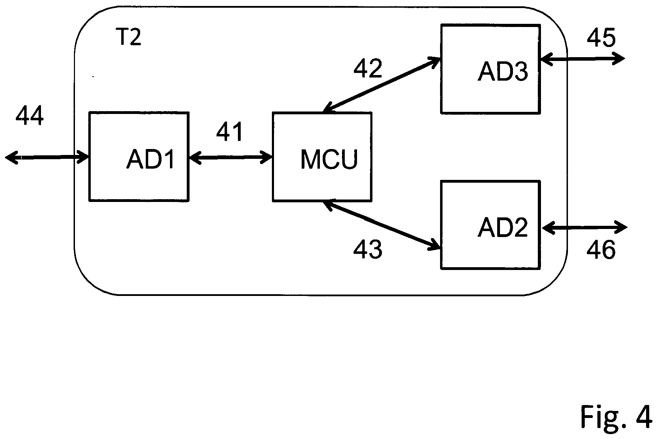

Wie in Figur 1 schematisch anhand eines bevorzugten Ausführungsbeispiels der Erfindung dargestellt ist, kann die Erfindung in Form einer räumlichen Anordnung einer Mehrzahl von zweiten Kommunikationsgeräten (T1, .., Tn) mit jeweils wenigstens zwei Funkschnittstellen (RI1, RI2) eines ersten Typs (RI1) und eines zweiten Typs (RI2) in einem Netzwerk (N) aus einer Mehrzahl von ersten Kommunikationsgeräten AP1, ..., APm mit jeweils wenigstens einer Funkschnittstelle des zweiten Typs RI2 verwirklicht werden, wobei das Netzwerk über die Funkschnittstellen des zweiten Typs RI2 vermittelt wird. Die ersten Kommunikationsgeräte sind vorzugsweise Access Points eines drahtlosen lokalen Netzwerks, eines sogenannten Wireless Local Area Networks. Die zweiten Kommunikationsgeräte sind vorzugsweise sogenannte Tubicles, wie sie beispielsweise schematisch in Figur 4 dargestellt sind.

Wenigstens ein Teil der ersten und der zweiten Kommunikationsgeräte ist zur Aussendung erster Signale BS1, ..., BSk, beispielsweise sogenannter "beacon signals", über die Funkschnittstellen des zweiten Typs RI2 eingerichtet. Wenigstens ein Teil der ersten und/oder der zweiten Kommunikationsgeräte ist zum Empfang dieser ersten Signale eingerichtet und mit Einrichtungen zur Schätzung ihrer eigenen Position innerhalb der räumlichen Anordnung anhand der empfangenen ersten Signale ausgestattet. Die ersten Signale werden dabei vorzugsweise über die Funkverbindungen 12, 13, 15, 16, 17, 18, 19, 20, oder über andere Funkverbindungen ausgestrahlt. Diese Signale sind vorzugsweise an alle Geräte in der Umgebung der dieses Signale aussendenden Geräte gerichtet ("broadcast mode"), welche diese Signale empfangen können. Die Verbindung 11 stellt die Anbindung des Netzes N an ein äußeres Netzwerk dar, vorzugsweise an das Intranet oder an das Internet. Die Verbindung 14 stellt eine Verbindung der Access Points unter einander dar, die vorzugsweise über die Funkschnittstelle RI2 des zweiten Typs vermittelt wird.

Wenigstens ein Teil der zweiten Kommunikationsgeräte ist mit einer Vorrichtung zum Aussenden zweiter Signale PS1,...,PS über die Funkschnittstellen des wenigstens einen ersten Typs RI1 ausgestattet. Die zweiten Signale PS1,...,PSj enthalten eine Angabe über die eigene Position der sie aussendenden zweiten Kommunikationsgeräte T1, .., Tn innerhalb der räumlichen Anordnung. Diese zweiten Signale werden vorzugsweise über eine der Funkschnittstellen RI1 des ersten Typs ausgesendet.

Zur Bestimmung der räumlichen Position eines Gerätes D empfängt das Gerät Positionsdaten einer Mehrzahl von Sendern T1,...,Tn in seiner Umgebung, welche jeweils ihre eigenen Positionsdaten als Funksignale PS1,...,PSj aussenden. Das Gerät D ermittelt aus den empfangenen Positionsdaten wenigstens eines Teils dieser Sender seine eigene Position. Die Sender sind Bestandteile einer Mehrzahl von zweiten Kommunikationsgeräten T1, .., Tn mit jeweils wenigstens zwei Funkschnittstellen RI1, RI2 eines ersten Typs RI1 und eines zweiten Typs RI2 in einem Netzwerk N aus einer Mehrzahl von ersten Kommunikationsgeräten AP1, ..., APm mit jeweils wenigstens einer Funkschnittstelle des zweiten Typs RI2, wobei das Netzwerk über die Funkschnittstellen des zweiten Typs RI2 vermittelt wird. Wenigstens ein Teil der ersten und der zweiten Kommunikationsgeräte sind zur Aussendung erster Signale BS1, ..., BSk über die Funkschnittstellen des zweiten Typs RI2 eingerichtet. Wenigstens ein Teil der ersten und/oder der zweiten Kommunikationsgeräte ist zum Empfang dieser ersten Signale eingerichtet und mit Einrichtungen zur Schätzung ihrer eigenen Position innerhalb der räumlichen Anordnung anhand der empfangenen ersten Signale ausgestattet. Wenigstens ein Teil der zweiten Kommunikationsgeräte sind mit einer Vorrichtung zum Aussenden zweiter Signale PS1,...,PSj über die Funkschnittstellen des wenigstens einen ersten Typs RI1 ausgestattet. Die zweiten Signale PS1,...,PSj enthalten eine Angabe über die eigene Position der sie aussendenden zweiten Kommunikationsgeräte T1,..., Tn innerhalb der räumlichen Anordnung.

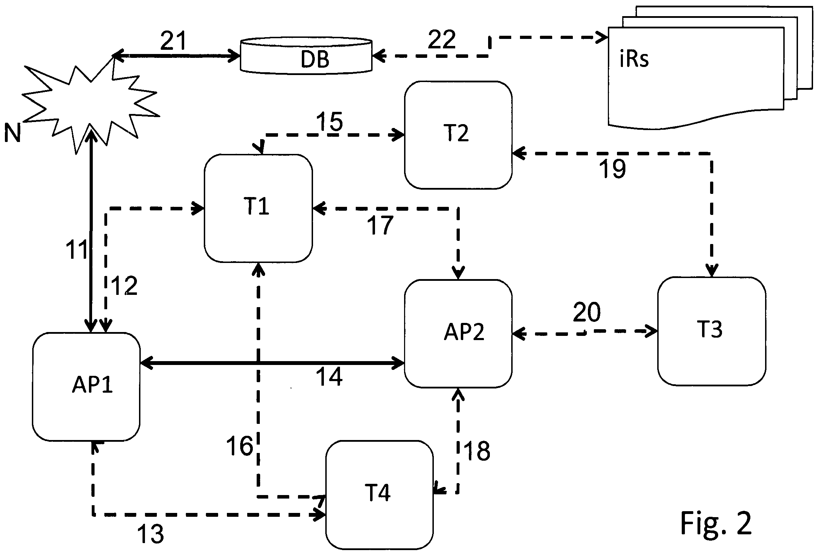

Wie in der Figur 2 anhand eines bevorzugten Ausführungsbeispiels schematisch dargestellt ist, können die ersten und/oder die zweiten Kommunikationsgeräte vorzugsweise über das Intranet oder über das Internet auf einen Server, beispielsweise einen "mapping server" zugreifen, der mit einer Datenbank DB verbunden ist. Über diesen Zugriff kann die Positionsbestimmung der Kommunikationsgeräte unterstützt werden. Die Datenbank DB enthält als Einträge vorzugsweise auch sogenannte "information Records" iRs, mit deren Hilfe die Positionsbestimmung der Kommunikationsgeräte unterstützt werden kann. Hierbei kann es sich vorzugsweise um Schätzwerte für die Positionen einzelner Kommunikationsgeräte handeln, die nach ihrer Ermittlung an den Server übermittelt und in dessen Datenbank DB vorzugsweise laufend aktualisiert werden. Auf diese Weise ist es beispielsweise möglich, aus anfänglich weniger genauen Positionsschätzungen im weiteren Verlauf des Verfahrens Schritt für Schritt genauere Positionen zu bestimmen. Zusätzlich zu den aktuellen Schätzwerten für die Positionen können die information records iRs auch noch Genauigkeitsschätzungen der Positionsschätzungen umfassen, so dass eine optimale Wichtung der einzelnen Positionswerte bei deren Verwendung zu einer verbesserten Schätzung möglich ist.

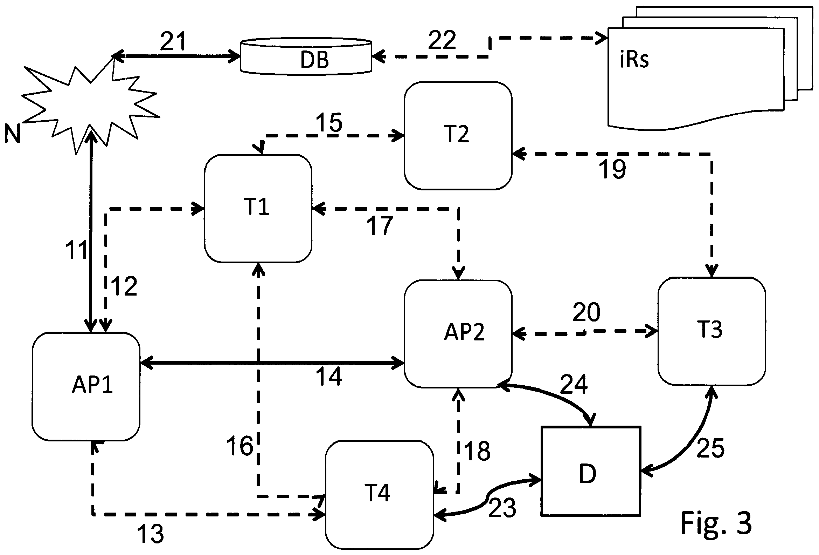

Ein Gerät D, welches beispielsweise ein von einem menschlichen Benutzer oder Träger mitgeführtes Kommunikationsgerät wie beispielsweise ein Mobiltelefon, Navigationsgerät, oder ähnliches sein kann, oder welches an einem Objekt wie einem Paket oder Speditionsgut angebracht sein kann, bezieht nun vorzugsweise, wie in Figur 3 anhand eines bevorzugten Ausführungsbeispiels schematisch dargestellt, Positionsinformationen 23, 24, 25 von wenigstens einem der ersten und oder zweiten Kommunikationsgeräte AP2, T3, T4 und ermittelt anhand der empfangenen Positionsdaten seine eigene Position. Dies kann je nach Verfügbarkeit der Daten und je nach der gewünschten Genauigkeit auf verschiedene Weise geschehen, beispielsweise durch eine Interpolation oder durch eine Triangulation oder durch jedes geeignete Verfahren zur Positionsbestimmung, d.h. zur Bestimmung der eigenen Position, aus den empfangenen Positionsdaten der das Gerät umgebenden ersten und oder zweiten Kommunikationsgeräte.

## Patentansprüche

1. Räumliche Anordnung einer Mehrzahl von zweiten Kommunikationsgeräten (T1, .., Tn) mit jeweils wenigstens zwei Funkschnittstellen (RI1, RI2) eines ersten Typs (RI1) und eines zweiten Typs (RI2) in einem Netzwerk (N) aus einer Mehrzahl von ersten Kommunikationsgeräten (AP1, ..., APm) mit jeweils wenigstens einer Funkschnittstelle des zweiten Typs (RI2), wobei das Netzwerk (N) über die Funkschnittstellen des zweiten Typs (RI2) vermittelt wird, wobei
- wenigstens ein Teil der ersten Kommunikationsgeräte (AP1, ..., APm) und der zweiten Kommunikationsgeräte (T1, .., Tn) zur Aussendung erster Signale (BS1, ..., BSk) über die Funkschnittstellen des zweiten Typs (RI2) eingerichtet sind,
- wenigstens ein Teil der ersten Kommunikationsgeräte (AP1, ..., APm) und/oder der zweiten Kommunikationsgeräte (T1, .., Tn) zum Empfang dieser ersten Signale (BS1, ..., BSk) eingerichtet und mit Einrichtungen zur Schätzung ihrer eigenen Position innerhalb der räumlichen Anordnung anhand der empfangenen ersten Signale (BS1, ..., BSk) ausgestattet sind,
- wenigstens ein Teil der zweiten Kommunikationsgeräte (T1, .., Tn) mit einer Vorrichtung zum Aussenden zweiter Signale (PS1,...,PSj) über die Funkschnittstellen des wenigstens einen ersten Typs (RI1) ausgestattet sind, wobei
- die zweiten Signale (PS1,...,PSj) eine Angabe über die eigene Position der sie aussendenden zweiten Kommunikationsgeräte (T1, .., Tn) innerhalb der räumlichen Anordnung enthalten, **dadurch gekennzeichnet, dass**
wenigstens ein drittes Kommunikationsgerät (D) mit einer Funkschnittstelle des ersten Typs (RI1) vorgesehen ist, welches mit einer Einrichtung zur Bestimmung der eigenen Position anhand der von diesem Kommunikationsgerät (D) über die Funkschnittstelle des ersten Typs (RI1) empfangenen, von zweiten Kommunikationsgeräten (T1, .., Tn) ausgesendeten zweiten Signale (PS1,...,PSj) ausgestattet ist, und
das dritte Kommunikationsgerät (D) so ausgestaltet ist, dass es Positionsdaten der zweiten Kommunikationsgeräte (T1, .., Tn) über wenigstens zwei Funkkanäle empfängt und seine eigene Position als Mittelwert der über die einzelnen Funkkanäle bestimmten Positionen ermittelt, und
die zweiten Kommunikationsgeräte (T1, .., Tn) als Gitter innerhalb der räumlichen Anordnung aufgestellt sind, und wenigstens die zweiten Signale (PS1,...,PSj) eine Angabe über die Position in drei Dimensionen enthalten.

2. Anordnung nach Anspruch 1, **dadurch gekennzeichnet, dass** das Netzwerk (N) mit einem Server verbunden ist, der eine Einrichtung (DB) zur Unterstützung der Schätzung der Positionen der zweiten Kommunikationsgeräte (T1, .., Tn) umfasst.

3. Anordnung nach Anspruch 2, **dadurch gekennzeichnet, dass** wenigstens ein Teil der zweiten Kommunikationsgeräte (T1, .., Tn) eine Einrichtung zur Weiterleitung der empfangenen ersten Signale (BS1, ..., BSk) zusammen mit einem Maß für die Stärke des jeweiligen Empfangssignals an den Server umfassen.

4. Anordnung nach einem der vorhergehenden Ansprüche, **dadurch gekennzeichnet, dass** wenigstens ein Teil der zweiten Kommunikationsgeräte (T1, .., Tn) eine Einrichtung zur Speicherung der empfangenen ersten Signale (BS1, ..., BSk) zusammen mit einem Maß für die Stärke des jeweiligen Empfangssignals umfassen.

5. Anordnung nach einem der vorhergehenden Ansprüche, **dadurch gekennzeichnet, dass** die Einrichtungen zur Durchführung einer Triangulation zur Schätzung der eigenen Position ausgerüstet sind.

6. Anordnung nach einem der vorhergehenden Ansprüche, **dadurch gekennzeichnet, dass** die zweiten Kommunikationsgeräte (T1, .., Tn) über eine Prozessoreinrichtung (MCU) und über wenigstens zwei Funkeinrichtungen (AD1,...,AD3) verfügen, wobei die Prozessoreinrichtung (MCU) die wenigstens zwei Funkeinrichtungen (AD1,...,AD3) steuert.

7. Verfahren zur Bestimmung der räumlichen Position eines dritten Kommunikationsgerätes (D) in einer räumlichen Anordnung gemäß einem der Ansprüche 1 bis 6, bei dem
- wenigstens ein Teil der ersten Kommunikationsgeräte (AP1, ..., APm) und der zweiten Kommunikationsgeräte (T1, .., Tn) erste Signale (BS1, ..., BSk) über die Funkschnittstellen des zweiten Typs (RI2) aussendet,
- wenigstens ein Teil der ersten Kommunikationsgeräte (AP1, ..., APm) und/oder der zweiten Kommunikationsgeräte (T1, .., Tn) diese ersten Signale (BS1, ..., BSk) empfängt und ihre eigene Position innerhalb der räumlichen Anordnung anhand der empfangenen ersten Signale (BS1, ..., BSk) schätzt, und
- wenigstens ein Teil der zweiten Kommunikationsgeräte (T1, .., Tn) zweite Signale (PS1,...,PSj) über die Funkschnittstellen des wenigstens einen ersten Typs (RI1) aussendet, wobei
- die zweiten Signale (PS1,...,PSj) eine Angabe über die eigene Position der sie aussendenden zweiten Kommunikationsgeräte (T1, .., Tn) innerhalb der räumlichen Anordnung enthalten,
**dadurch gekennzeichnet, dass**
das dritte Kommunikationsgerät (D) die eigene Position anhand der über die Funkschnittstelle des ersten Typs (RI1) empfangenen, von als Gitter innerhalb der räumlichen Anordnung aufgestellten zweiten Kommunikationsgeräten (T1, .., Tn) ausgesendeten zweiten Signale (PS1,...,PSj) dadurch bestimmt, dass es Positionsdaten der zweiten Kommunikationsgeräte (T1, .., Tn) über wenigstens zwei Funkkanäle empfängt und seine eigene Position als Mittelwert der über die einzelnen Funkkanäle bestimmten Positionen ermittelt, und
wenigstens die zweiten Signale (PS1,...,PSj) eine Angabe über die Position in drei Dimensionen enthalten.

8. Verfahren nach Anspruch 7, **dadurch gekennzeichnet, dass** die zweiten Kommunikationsgeräte (T1,...,Tn) räumlich stationär sind und ihre eigene Position nur innerhalb einer Initialisierungsphase oder nach einem Wechsel ihres Standortes ermitteln.

## Claims

1. A spatial layout of a plurality of second communication devices (T1, ..., Tn) with at least two radio interfaces (RI1, RI2) respectively of a first type (RI1) and a second type (RI2) in a network (N) of a plurality of first communication devices (AP1, ..., APm) with at least one radio interface of the second type (RI2) respectively, wherein the network (N) is switched via the radio interfaces of the second type (RI2), wherein
- at least a part of the first communication devices (AP1, ..., APm) and of the second communication devices (T1, ..., Tn) is adapted for the emission of first signals (BS1, ..., BSk) via the radio interfaces of the second type (RI2),
- at least a part of the first communication devices (AP1, ..., APm) and/or of the second communication devices (T1, ..., Tn) is adapted for the reception of these first signals (BS1, ..., BSk) and equipped with features for the estimation of their own position within the spatial layout by means of the received first signals (BS 1, ..., BSk),
- at least a part of the second communication devices (T1, ..., Tn) is equipped with an apparatus for the emission of second signals (PS1, ..., PSj) via the radio interfaces of the at least one first type (RI1), wherein
- the second signals (PS1, ..., PSj) comprise an indication of the own position of the second communication devices (T1, ..., Tn) that are emitting them within the spatial layout,
**characterized in that**
at least a third communication device (D) is provided with a radio interface of the first type (RI1), which is equipped with a feature for the determination of its own position by means of the second signals (PS1, ..., PSj) received by this communication device (D) via a radio interface of the first type (RI1) and emitted by second communication devices (T1, ..., Tn), and
the third communication device (D) is designed in such a way that it receives the position data of the second communication devices (T1, ..., Tn) via at least two radio channels and establishes its own position as an average value of the positions determined via the individual radio channels, and the second communication devices (T1, ..., Tn) are set up as a grid within the spatial layout, and at least the second signals (PS1, ..., PSj) comprise an indication of the position in three dimensions.

2. The layout according to claim 1, **characterized in that** the network (N) is connected to a server which includes a feature (DB) to assist in the estimation of the positions of the second communication devices (T1, ..., Tn).

3. The layout according to claim 2, **characterized in that** at least a part of the second communication devices (T1, ..., Tn) includes a feature for the forwarding of the received first signals (BS1, ..., BSk) together with a measure of the strength of the respective reception signal to the server.

4. The layout according to any one of the previous claims, **characterized in that** at least a part of the second communication devices (T1, ..., Tn) comprises a feature for the saving of the received first signals (BS1, ..., BSk) together with a measure of the strength of the respective reception signal.

5. The layout according to any one of the previous claims, **characterized in that** the features are equipped for performing a triangulation for the estimation of their own position.

6. The layout according to one of the previous claims, **characterized in that** the second communication devices (T1, ..., Tn) have a processor feature (MCU) and at least two radio features (AD1,..., AD3), wherein the processor feature (MCU) controls the at least two radio features (AD1,..., AD3).

7. A method for the determination of the spatial position of a third communication device (D) in a spatial layout according to one of the claims 1 to 6, in which
- at least a part of the first communication devices (AP1, ..., APm) and of the second communication devices (T1, ..., Tn) emits first signals (BS1, ..., BSk) via the radio interfaces of the second type (RI2),
- at least a part of the first communication devices (AP1, ..., APm) and/or of the second communication devices (T1, ..., Tn) receives these first signals (BS1, ..., BSk) and estimates their own position within the spatial layout by means of the received first signals (BS 1, ..., BSk), and
- at least a part of the second communication devices (T1, ..., Tn) emits second signals (PS1,..., PSj) via the radio interfaces of the at least one first type (RI1), wherein
- the second signals (PS1, ..., PSj) comprise an indication of the own position of the second communication devices (T1, ..., Tn) that are emitting them within the spatial layout,
**characterized in that**
the third communication device (D) determines its own position by means of the second signals (PS1,..., PSj) received via the radio interface of the first type (RI1), emitted by the second communication devices (T1, ..., Tn) set up as a grid within the spatial layout by receiving the position data of the second communication devices (T1, ..., Tn) via at least two radio channels and establishing its own position as an average value of the positions determined via the individual radio channels, and
at least the second signals (PS1, ..., PSj) comprise an indication of the position in three dimensions.

8. A method according to claim 7, **characterized in that** the second communication devices (T1,...,Tn) are spatially stationary and establish their own position solely within an initialization phase or after a change of their location.

## Revendications

1. Configuration spatiale d'une pluralité de deuxièmes appareils de communication (T1, ..., Tn) avec respectivement au moins deux interfaces radio (RI1, RI2) d'un premier type (RI1) et d'un deuxième type (RI2) dans un réseau (N) d'une pluralité de premiers appareils de communication (AP1, ..., APm) avec respectivement au moins une interface radio du deuxième type (RI2), ledit réseau (N) étant commuté par des interfaces radio du deuxième type (RI2), dans laquelle
- au moins une partie des premiers appareils de communication (AP1, ..., APm) et des deuxièmes appareils de communication (T1, ..., Tn) est adaptée pour émettre de premiers signaux (BS1, ..., BSk) par l'interface radio du deuxième type (RI2),
- au moins une partie des premiers appareils de communication (AP1, ..., APm) et/ou des deuxièmes appareils de communication (T1, ..., Tn) est adaptée pour recevoir ces premiers signaux (BS1, ..., BSk) et munie d'équipements permettant d'estimer leur propre position à l'intérieur de la configuration spatiale au moyen des premiers signaux (BS1, ..., BSk) reçus,
- au moins une partie des deuxièmes appareils de communication (T1, ..., Tn) est munie d'un dispositif permettant d'émettre des deuxièmes signaux (PS1, ..., PSj) par les interfaces radio dudit au moins un premier type (RI1), dans laquelle
- les deuxièmes signaux (PS1, ..., PSj) comprennent une indication de la position propre des deuxièmes appareils de communication (T1, ..., Tn) qui les émettent à l'intérieur de la configuration spatiale, **caractérisée en ce que**
au moins un troisième appareil de communication (D) avec une radio interface du premier type (RI1) est prévu et muni d'un équipement permettant de déterminer sa propre position au moyen des deuxièmes signaux (PS1, ..., PSj) reçus par ledit appareil de communication (D) par une interface radio du premier type (RI1) et émis par des deuxièmes appareils de communication (T1, ..., Tn), et
le troisième appareil de communication (D) est réalisé de telle sorte qu'il reçoit des données de position des deuxièmes appareils de communication (T1, ..., Tn) par au moins deux canaux radio et établit sa propre position comme une valeur moyenne des positions déterminées sur les canaux radio individuels, et les deuxièmes appareils de communication (T1, ..., Tn) sont déployés sous forme de grille à l'intérieur de la configuration spatiale, et au moins les deuxièmes signaux (PS1, ..., PSj) comprennent une indication de la position en trois dimensions.

2. Configuration selon la revendication 1, **caractérisée en ce que** le réseau (N) est connecté à un serveur qui comprend un équipement (DB) permettant de prendre en charge l'estimation des positions des deuxièmes appareils de communication (T1, ..., Tn).

3. Configuration selon la revendication 2, **caractérisée en ce qu'**au moins une partie des deuxièmes appareils de communication (T1, ..., Tn) comprend un équipement permettant de transférer au serveur les premiers signaux (BS1, ..., BSk) reçus avec une mesure de l'intensité du signal de réception respectif.

4. Configuration selon l'une quelconque des revendications précédentes, **caractérisée en ce qu'**au moins une partie des deuxièmes appareils de communication (T1, ..., Tn) comprend un équipement permettant de sauvegarder les premiers signaux (BS1, ..., BSk) reçus avec une mesure de l'intensité du signal de réception respectif.

5. Configuration selon l'une quelconque des revendications précédentes, **caractérisée en ce que** les équipements sont aménagés pour effectuer une triangulation afin d'estimer leur propre position.

6. Configuration selon l'une quelconque des revendications précédentes, **caractérisée en ce que** les deuxièmes appareils de communication (T1, ..., Tn) disposent d'un équipement de processeur (MCU) et d'au moins deux équipements radio (AD1, ..., AD3), dans laquelle l'équipement de processeur (MCU) commande lesdits au moins deux équipements radio (AD1, ..., AD3).

7. Procédé de détermination de la position spatiale d'un troisième appareil de communication (D) dans une configuration spatiale selon l'une quelconque des revendications 1 à 6, dans lequel
- au moins une partie des premiers appareils de communication (AP1, ..., APm) et des deuxièmes appareils de communication (T1, ..., Tn) émet des premiers signaux (BS1, ..., BSk) par les interfaces radio du deuxième type (RI2),
- au moins une partie des premiers appareils de communication (AP1, ..., APm) et/ou des deuxièmes appareils de communication (T1, ..., Tn) reçoit ces premiers signaux (BS1, ..., BSk) et estime sa propre position à l'intérieur de la configuration spatiale au moyen des premiers signaux (BS1, ..., BSk) reçus, et
- au moins une partie des deuxièmes appareils de communication (T1, ..., Tn) émet des deuxièmes signaux (PS1, ..., PSj) par les interfaces radio dudit au moins un premier type (RI1), dans lequel
- les deuxièmes signaux (PS1, ..., PSj) comprennent une indication de la position propre des deuxièmes appareils de communication (T1, ..., Tn) qui les émettent à l'intérieur de la configuration spatiale,
**caractérisé en ce que**
le troisième appareil de communication (D) détermine sa propre position au moyen des deuxièmes signaux (PS1, ..., PSj) reçus par l'interface radio du premier type (RI1), émis par les deuxièmes appareils de communication (T1, ..., Tn) déployés sous forme de grille à l'intérieur de la configuration spatiale, en recevant des données de position des deuxièmes appareils de communication (T1, ..., Tn) sur au moins deux canaux radio et en établissant sa propre position comme une valeur moyenne des positions déterminées sur les canaux radio individuels, et
au moins les deuxièmes signaux (PS1, ..., PSj) comprennent une indication de la position en trois dimensions.

8. Procédé selon la revendication 7, **caractérisé en ce que** les deuxièmes appareils de communication (T1, ..., Tn) sont stationnaires dans l'espace et établissent leur propre position uniquement dans une phase d'initialisation ou après un changement de leur emplacement.
